Europäisches Patentamt

(19) European Patent Office

Office européen des brevets

(11) Veröffentlichungsnummer: **0 003 310**
**B1**

(12) **EUROPÄISCHE PATENTSCHRIFT**

(45) Veröffentlichungstag der Patentschrift:
**31.08.83**

(51) Int. Cl.³: **G 03 B 27/80**

(21) Anmeldenummer: **79100118.3**

(22) Anmeldetag: **16.01.79**

(54) Verfahren und Vorrichtung zum Bestimmen von Kopierlichtmengen für das Kopieren von Farbvorlagen.

(30) Priorität: **26.01.78 DE 2803381**

(43) Veröffentlichungstag der Anmeldung:
**08.08.79 Patentblatt 79/16**

(45) Bekanntmachung des Hinweises auf die Patenterteilung:
**31.08.83 Patentblatt 83/35**

(84) Benannte Vertragsstaaten:
**BE CH FR GB IT NL SE**

(56) Entgegenhaltungen:
**DE-A-2 356 277**
**DE-A-2 633 053**
**DE-A-2 810 295**
**FR-A-1 186 537**
**US-A-2 269 161**

(73) Patentinhaber: **AGFA-GEVAERT Aktiengesellschaft,**
**D-5090 Leverkusen 1 (DE)**

(72) Erfinder: **Thurm, Siegfried, Dr., Mutzbroicher Strasse 29,**
**D-5068 Voiswinkel (DE)**
Erfinder: **Bunge, Konrad, Dr., Morgengraben 16,**
**D-5000 Köln 80 (DE)**

ACTORUM AG

# Verfahren und Vorrichtung zum Bestimmen von Kopierlichtmengen für das Kopieren von Farbvorlagen

Die Erfindung betrifft ein Verfahren und eine Vorrichtung zum Bestimmen von Kopierlichtmengen für das Kopieren von Farbvorlagen, insbesondere von Farbnegativen, auf fotographisches Farbkopiermaterial mittels einzeln steuerbarer Farbbelichtungen, wobei auf unbelichtete, ausserhalb des Bildbereiches liegende Bereiche desselben Aufnahmematerials der Farbvorlage vor dem Entwickeln eine Testbelichtung von vorbekannt unterschiedlichen Graustufen aufgebracht wird, die vor dem Kopieren in den verschiedenen Farben ausgemessen wird und wobei aufgrund der Messergebnisse die Kopierlichtmengen für die Farbbelichtungen beeinflusst werden.

Ein derartiges Verfahren ist z. B. aus der US-Patentschrift 2 269 161 bekannt, wobei auf den Originalfilm mit Blitz oder neutral weissem Licht ein grauer Gegenstand abgebildet wird. Die Belichtungssteuerung beim Kopieren erfolgt dann so, dass eventuelle Farbverschiebungen des Graubildes gegenüber dem ursprünglichen grauen Gegenstand gerade kompensiert werden. Auf diese Weise kann ein Farbstich des Aufnahmematerials ausgeglichen werden.

Dieses Verfahren führt nicht zu befriedigenden Kopien in folgenden Fällen:
- das zu kopierende Negativ wurde bei einer für das Aufnahmematerial unspezifischen Beleuchtungsart aufgenommen (Beleuchtungsfarbstich);
- zwischen Aufnahme- und Entwicklungszeitpunkt tritt eine Änderung des latenten Bildes ein.

So können Aufnahmen, die bei einem Licht mit sehr hohem Rotanteil, z. B. kurz vor Sonnenuntergang, gemacht wurden, einen unangenehmen Rotstich aufweisen. Auf der anderen Seite sind Aufnahmen bei bedecktem Himmel normalerweise stark blaustichig.

Aufgabe der Erfindung ist es, ein Farbkopierverfahren der eingangs genannten Art so abzuwandeln, dass auch beim Auftreten ungewöhnlicher Beleuchtungsverhältnisse bei der Aufnahme und/oder bei längerem Zeitabstand zwischen der Aufnahme und dem Aufbringen der Testbelichtungen befriedigende Kopien erzielt werden. Diese Aufgabe wird gelöst durch die in dem beiliegenden Anspruch 1 beschriebene Erfindung.

Durch die erfindungsgemässe Kombination der sogenannten aufnahmematerial- oder filmspezifischen Werte mit den Messwerten für die jeweils zu kopierende Kopiervorlage wird unter Anwendung der sogenannten Neutralgraukompensation das Verhältnis der einzelnen Farbwerte in der Kopiervorlage zusätzlich in die Farbsteuerung eingeführt, so dass z. B. ein von der Art der Aufnahmebeleuchtung herrührender deutlicher Farbstich teilweise ausgeglichen wird.

Weitere Einzelheiten und Vorteile der Erfindung, auch einer Vorrichtung zur vollautomatischen Durchführung des beschriebenen Verfahrens, ergeben sich aus den Unteransprüchen im Zusammenhang mit der Beschreibung eines Ausführungsbeispieles, das anhand von Figuren eingehend erläutert ist. Es zeigen:

Fig. 1 eine schematische Darstellung eines Kopiergeräts zur Durchführung des beschriebenen Verfahrens,

Fig. 2 ein Blockschaltbild zur Steuerung des Kopiergeräts gemäss Fig. 1 und

Fig. 3 eine graphische Darstellung des Verlaufs der Farbdichtedifferenzen in den Graukeilaufnahmen eines üblichen Films.

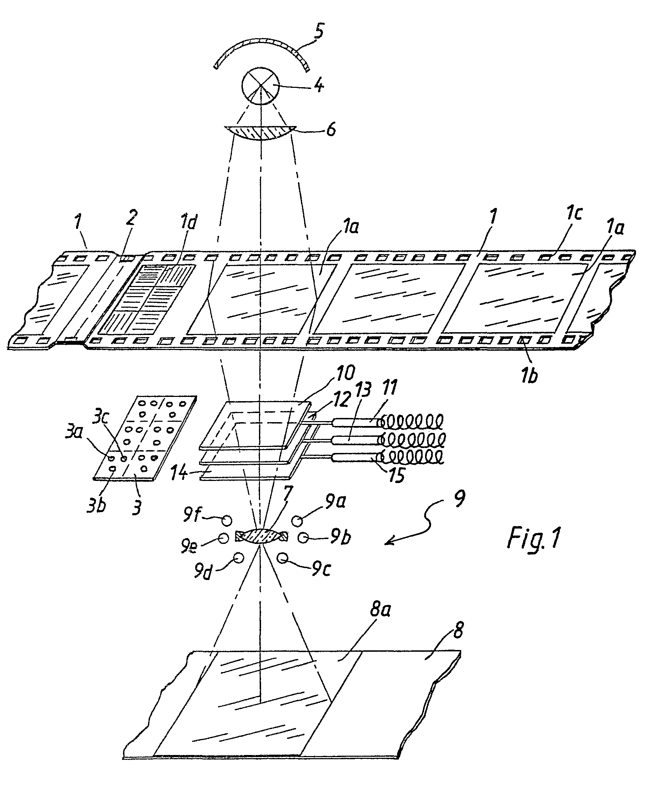

In Fig. 1 ist mit 1 ein fotografischer Film des sogenannten Kleinbildformates bezeichnet, der nach der Entwicklung eine Reihe von Vorlagen 1a zwischen den Perforationslöchern 1b enthält. Die einzelnen Bildfelder 1a sind nicht in genauer räumlicher Zuordnung zu den Perforationslöchern 1b angeordnet; zur Positionierung der Kopiervorlagen in der Kopierstation dienen vielmehr am Rand angebrachte, halbkreisförmige Kerben 1c, die in einem Arbeitsgang nach der Entwicklung entsprechend den Ergebnissen einer fotoelektrischen Abtastung der vor- und nachlaufenden Bildfeldgrenzen am Film angebracht wurden. Der Film 1 ist als langer Streifen ausgebildet, wobei in der Regel zur leichteren Handhabung der Filmstreifen mehrere zu einem langen, aufrollbaren Band zusammen geklebt sind, so dass nicht jeweils bei Filmbeginn ein neuer Filmanfang in das Kopiergerät eingeführt werden.muss. Der Filmstreifen 1 ist mit dem vorhergehenden Filmstreifen 1 durch eine Klebestelle mittels eines Klebebandes 2 fest verbunden. In dem Bereich zwischen dem Klebeband 2 und dem ersten Bildfeld 1a sind nun Bilder eines grauen Gegenstandes aufbelichtet, insbesondere eine Grautreppe mit sechs Abstufungen. Diese Grautreppe wird je nach Verhältnis der Grösse im Kontaktverfahren oder im abbildenden Verfahren aufbelichtet, wobei die Ausgangsgraufilter Dichten von 0, 1, 2, 3 und 4 aufweisen, während die letzte Stufe aus vollständig undurchlässigem Material besteht. Die Lichtmenge bei der Aufbelichtung ist so bestimmt, dass die Kopie des Graufilters der Dichte 3 eine mittlere Dichte aufweist, die ca. 0,6 über der mittleren Dichte von unbelichtetem Aufnahmematerial liegt. Die Farbtemperatur der Lichtquelle ist auf das Aufnahmematerial abgestimmt. Die Aufbelichtung mehrerer Graufilter unterschiedlicher Dichte ist notwendig, weil bei den gebräuchlichen Farbnegativaufnahmematerialien innerhalb eines Filmes Negative unterschiedlicher mittlerer Dichte auftreten können – Über-, Unter- und Normalbelichtungen – so dass zur Herstellung guter Kopien unterschiedliche Verhältnisse der Kopierlichtmengen notwendig sind. Der Zeitpunkt des Aufbelichtens der Testbelichtungen kann verschieden gelegt werden, jedoch soll zur richtigen Auswertung bekannt sein, wann die Teste aufbelichtet wurden. Besonders zweckmässig ist es, dies kurze Zeit vor der Entwicklung oder im Zusammenhang mit der Konfektionierung, d. h. dem Aufbelichten der Bildernummern durchzuführen.

Besonders gute Informationen über Veränderungen des latenten Bildes bekommt man, wenn sowohl bei der Konfektionierung als auch kurz vor der Entwicklung an anderer Stelle Testbelichtungen durchgeführt werden. Die Differenzen zwischen den Messwerten der beiden Teste ergeben ein Mass für die grösstmöglichen Änderungen des latenten Bildes. Sind diese gross, kann entweder versucht werden, diese durch Feststellen eines Gelb-Grün-Stiches zu erkennen und mit den bei der Konfektionierung aufbelichteten Testen zu bewerten oder generell die vorlagenspezifischen Werte stärker zu berücksichtigen.

Bei dem gezeigten Kleinbildfilm 1 können die Graufilterbilder 1d in solcher Grösse auf den Film aufbelichtet werden, dass ohne grösseren Aufwand mit einer dicht an den Film herangeführten fotoelektrischen Zelle die Dichten in den drei Grundfarben in jeder der sechs Grautreppenstufen gemessen werden können. Eine Messeinrichtung 3 weist deshalb ebenso wie die Grautreppenaufnahme 1d sechs gleich angeordnete Felder auf mit jeweils drei, für je eine der drei Grundfarben sensibilisierten Fotozellen 3a, 3b und 3c. Es können also die achtzehn Messwerte für die drei Farbdichten der sechs Felder gleichzeitig gemessen werden. Anstelle dieser im Durchlicht einer das gesamte Feld 1d ausleuchtenden, nicht dargestellten Lichtquelle messenden Einrichtung mit achtzehn Zellen könnte auch eine Einrichtung mit nur drei Zellen vorgesehen sein, von denen jeweils eine für eine der drei Grundfarben sensibilisiert ist und denen nacheinander das jeweils von einer der Grautreppenstufen 1d durchgelassene Licht zugeführt wird.

In einer gegenüber der Messeinrichtung 3 versetzten Kopierstation ist eine Kopierlichtquelle 4 mit Reflektor 5 und Kondensor 6 vorgesehen, die das in der Kopierstation befindliche Negativ 1a gleichmässig ausleuchtet. Unterhalb des Negativs ist ein Objektiv 7 angeordnet, das das Negativ 1a auf einen entsprechenden Abschnitt 8a eines bandförmigen Kopienträgers 8 abbildet. Rund um das Objektiv 7 sind in den drei Grundfarben sensibilisierte fotoelektrische Zellen 9a, 9b, 9c, 9d, 9e, 9f angeordnet, die in noch zu beschreibender Weise mit einer Schaltung zur Belichtungssteuerung verbunden sind. Im gezeigten Ausführungsbeispiel sind zwischen dem Objektiv 7 und dem Negativ 1a subtraktive Filter 10, 12 und 14 durch Elektromagnete 11, 13 und 15 in den Strahlengang einführbar bzw. aus diesem herausziehbar angeordnet. Diese Filter können bei der gezeigten Ausführungsform an jeder beliebigen Stelle zwischen der Lichtquelle 4 und dem Kopiermaterial 8 im Strahlengang ahgeordnet sein.

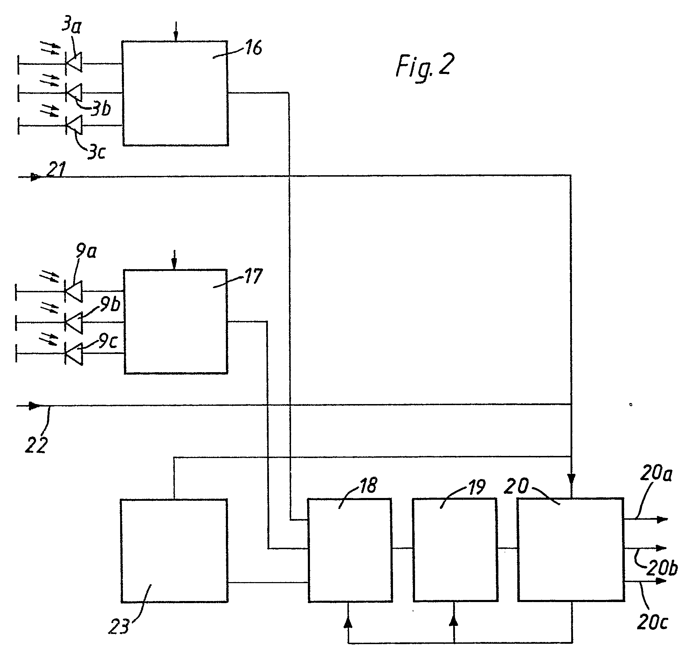

Aus dem Blockschaltbild gemäss Fig. 2 ist die Zuordnung der Messeinrichtungen 3 und 9 zu der Belichtungssteuervorrichtung entnehmbar. Sowohl die Messeinrichtung 3, im vorliegenden Fall als Fotodioden 3a, b, c, ausgebildet und für aufeinanderfolgende Abtastung der einzelnen Grautreppenstufen 1d angeordnet, als auch die Messeinrichtung 9, bestehend aus den fotoelektrischen Zellen 9a bis 9f, zur Ermittlung der Farbdichten der einzelnen Bildfelder 1a sind an Logarithmiereinrichtungen 16 bzw. 17 angeschlossen. Die von den Lichtempfängern abgegebenen Spannungen als Mass der Transparenz werden dabei in Dichtewerte umgesetzt. Diese Dichtewerte laufen über einen Multiplexer 18 zu einem Analogdigitalwandler 19 und gelangen von dort in einen Rechner 20, der nach im folgenden noch beschriebenen Gleichungen die Einzelbelichtungszeiten für die drei Farben in dem Kopiergerät gemäss Fig. 1 errechnet. Die drei Ausgänge 20a, b und c markieren dabei die Leitungen zur Steuerung der Elektromagnete 11, 13 und 15.

Der Rechner wird in seiner Taktung gesteuert durch sogenannte Steuereingänge 21 und 22, wobei der Steuereingang 21 gesteuert wird durch die richtige Position der Grautreppenbilder 1d in Zuordnung zu der Abtasteinrichtung 3 und dann durch die aufeinanderfolgende Abtastung der einzelnen Treppenstufen. Der Steuereingang 22 ist bestimmt durch eine Abtasteinrichtung für die Positionskerben, die den Bildfeldern 1a zugeordnet sind und die angeben, wann eine Vorlage 1a in der Kopierstellung positioniert ist. Schliesslich sind in einem Speicher 23 Parameter für die Eigenschaften des Films und des Papiers in dem Prozess enthalten, die bei der Ermittlung der jeweiligen Einzelbelichtungszeiten zu berücksichtigen sind.

In dem Prozessrechner 20 finden folgende Berechnungen statt:

Zur Anpassung der Densitometer (bestehend aus den Fotozellen 3a, 3b, 3c und Logarithmierer 16, bzw. 9a bis 9f und 17) an die Kombination Beleuchtungssystem, Negativmaterial und Papiereigenschaften ist die Möglichkeit zur Anwendung von additiven und multiplikativen Konstanten gegeben, die einstellbar sind. Eine derartige Anpassung ist notwendig, um eventuell auftretende Farbabweichungen qualitativ und quantitativ genauso bestimmen zu können, wie sie vom Positivmaterial wiedergegeben werden. Die Ermittlung der Anpassung geschieht wie folgt: Auf einen Teil des Negativmaterials wird eine Reihe von Graufiltern unterschiedlicher Dichte – in einer bevorzugten Ausführungsform von Dichten zwischen 0 und 6 mit einer Abstufung von 0,2 – mit jeweils der gleichen Lichtmenge derart kopiert, dass der gesamte Belichtungsbereich des Aufnahmematerials überdeckt wird. Anschliessend wird das zum Kopieren zu verwendende Belichtungssystem so eingestellt, dass das entwickelte Bild mit der Dichte 1 eines Graufilters neutralgrau kopiert wird. Dann werden bei gleichbleibender Intensität in den Farben der Beleuchtung diejenigen Belichtungszeiten in den drei Farben empirisch ermittelt, die notwendig sind, um von den Aufnahmen der anderen Graufilter gleich dichte und neutralgraue Kopien zu erzeugen. Aus den Verhältnissen der Zeiten, die zur Erzeugung identischer Kopien der Aufnahmen der Dichte 1 und der Aufnahmen der anderen Graufilter notwendig waren, können die Verhältnisse der Transparenzen und somit die Differenzen der Dichte bestimmt werden, wie sie von dem Positivmaterial registriert wurden. Anschliessend werden die Dichten der Aufnahmen der Graufilter mit dem zu eichenden Densitometer gemessen, die Differenzen zwischen den Messwerten der Aufnahme der Dichte 1 und denen der anderen Aufnahmen berechnet und mit den empirisch bestimmten Belichtungszeiten und daraus abgeleiteten Dichtedifferenzen verglichen. Man erhält somit eine Eichtabelle, um aus den Messwerten des Densitometers die Dichtedifferenzen so zu bestimmen, wie sie von dem Positivmaterial registriert werden. Durch die empirische Bestimmung der Eichtabelle mittels Vorlagen verschiedener Dichte wird der Schwarzschildeffekt der lichtempfindlichen Schichten des Positivmaterials berücksichtigt.

Es ergeben sich für jede der sechs Grautreppenstufen drei Farbdichtewerte d f b, d f g und d f r. Zu jeder der sechs Grautreppenstufen wird dann die Neutraldichte d f n errechnet durch Addition der drei Einzeldichten und Division durch 3, wobei auch durch entsprechende Faktoren eine unterschiedliche Gewichtung der einzelnen Farbdichtewerte möglich ist. Dann wird für jede der Grautreppenstufen die Differenz der Farbdichtewerte in Blau und Grün bzw. Rot und Grün gebildet, gemäss der Gleichung

d f b g = d f b − d f g
d f r g = d f r − d f g.

Die auf diese Weise berechneten zwölf Einzelwerte werden zusammen mit den zugehörigen Neutraldichten d f n in dem Rechner gespeichert.

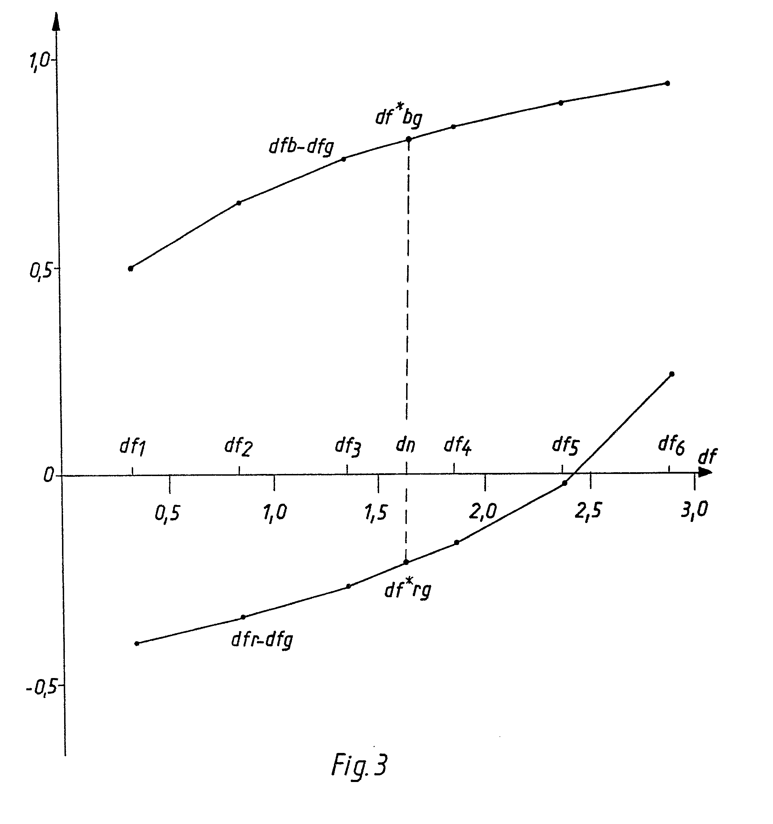

Diese Werte lassen sich auch grafisch darstellen, wie dies in Fig. 3 geschehen ist. Dort sind in der Abszisse die Neutraldichtewerte mit linearem Massstab aufgetragen, während in der Ordinate jeweils über den Neutraldichtewerten d f 1 ... 6 die zugehörigen Farbdichtediffereznwerte d f b − d f g bzw. d f r − d f g aufgetragen sind. Dabei ergibt sich ein charakteristischer Verlauf der beiden Kurven. Bei bekanntem Filmfabrikat sind an dem Verlauf dieser Kurven eventuelle, vor dem Aufbelichten des Grautreppenbildes aufgetretene Veränderungen in der Empfindlichkeit erkennbar.

Darüber hinaus besteht die Möglichkeit, durch Aufbelichten von Grautreppen einmal inmittelbar bei der Konfektionierung des Films, zum anderen kurz vor der Entwicklung des Films in zwei verschiedenen Zeitstadien die Empfindlichkeit der Filme festzuhalten. Durch Vergleich der beiden an verschiedenen Stellen des Aufnahmematerials aufbelichteten Grautreppen kann dann festgestellt werden ob z. B. durch lange Lagerzeit der latenten Bilder oder Temperatureinflüsse sich wesentliche Verschiebungen in diesem Zeitraum ergeben haben. Die Auswertung dieser Messergebnisse kann nun im einfacheren Fall so erfolgen, dass bei Filmen, bei denen zwischen dem Aufbelichten der ersten Grautreppe und der zweiten Grautreppe wesentliche Verschiebungen in den Filmeigenschaften eingetreten sind, generell die vorlagenspezifischen Werte zur Belichtungssteuerung herangezogen werden. In diesem Fall wird aufgrund der Vorlagenwerte eine Neutralgraukompensation durchgeführt, die in der Regel bei 80% bis 90% der Bilder zu guten Ergebnissen führt und nur bei ausgeprägten Dominanten versagt. Bei einer verfeinerten Korrekturmethode kann differenziert werden zwischen Aufnahmen, die vor der Alterung des Filmes schon aufbelichtet wurden, und deren latentes Bild sehr stark durch die Lagerung beeinträchtigt wurde, und Aufnahmen, die in nicht allzugrossem Zeitabstand vor der Entwicklung aufbelichtet wurden. Für die ersteren kann dann die Grautreppe, die im Zusammenhang mit der Konfektionierung aufbelichtet wurde, als filmspezifischer Wert herangezogen werden, während für die letzteren Aufnahmen der kurz vor der Entwicklung aufbelichtete filmspezifische Wert massgebend ist. Die Unterscheidung zwischen diesen beiden Filmzuständen kann durch Vergleich der Farbdichten in den Vorlagen getroffen werden, da bekannt ist, dass durch zu lange Lagerung des latenten Bildes z. B. ein erheblicher Gelb-Grün-Stich erzeugt wird.

Für eine gegebene Kopiervorlage lässt sich nun eine Neutraldichte, d. h. der arithmetische Mittelwert der drei integralen Farbdichten, ermitteln. Unter bestimmten Voraussetzungen kann anstelle des integralen Farbdichtewertes einer Vorlage auch ein z. B. für den Zentralbereich stärker gewichteter Farbdichtewert zum Ermitteln der Neutraldichte Verwendung finden. Zu diesem Neutraldichtewert werden aus dem Diagramm gemäss Fig. 3 durch lineare Interpolation die beiden Farbdichtedifferenzen ermittelt, die für die Eigenschaften des Aufnahmematerials bei einer derartigen mittleren Belichtung kennzeichnend sind. In dem Rechner 20 kann dieser in Fig. 3 grafisch vollzogene Prozess der Ermittlung der zugehörigen filmspezifischen Werte rechnerisch durchgeführt werden oder es können einfach die Differenzwerte der der Neutraldichte der Kopiervorlage am nächsten kommende Neutraldichte einer Grautreppenstufe ausgewählt werden. Bei verfeinerter Rechenweise kann der Interpolationsvorgang gemäss Fig. 3 rechnerisch vollzogen werden.

Aus den so gefundenen aufnahmematerialspezifischen Farbdichtedifferenzen und der zugehörigen Neutraldichte lassen sich dann die aufnahmematerialspezifischen Farbdichtewerte d f* b, g, r der Einzelfarben ermitteln. Mit Hilfe dieser aufnahmematerialspezifischen Farbdichtewerte lässt sich eine solche Filterung beim Kopiervorgang durchführen, dass sich, abgesehen von gewissen Verschiebungen in der Filmcharakteristik zwischen dem Zeitpunkt der Aufnahme des Motivs und der Belichtung des Grautreppenbildes, eine objektiv richtige Farbwiedergabe ergibt. Dies wird erreicht bei einer Filterung, die für die Grautreppenbilder der entsprechenden Dichte gerade wieder ein neutrales Grau ergibt.

Um die eventuellen Fehlermöglichkeiten von der Farbvorlage her ebenfalls zu berücksichtigen, werden jedoch gemischte Farbdichtewerte aus den Messwerten der Grautreppe und der Farbvorlage gebildet. Für die gemischten Farbdichtewerte ergibt sich dann

d b, g, r =
c', b, g, r, . d n b, g, r+(1−c' b, g, r) d f* b g r

wobei c' für Blau, Grün und Rot der sogenannte Mischungsfaktor ist, der konstant sein kann und in erster Näherung 0,5 beträgt. Dies bedeutet, dass die aufnahmematerialspezifischen und die vorlagenspezifischen Messwerte zu gleichen Teilen in die Bestimmung der gemittelten Farbdichtewerte eingehen. $d\,n\,b$, g und r bedeuten die Messwerte für die integralen Farbdichtewerte der Vorlagen. Anstelle der integralen Farbdichtewerte können auch die Messwerte bestimmter Vorlagenbereiche oder besonders gewichtete oder abgeleitete Farbdichtewerte eingesetzt werden. $d\,f^*\,b$, g und r bedeuten die aufnahmematerialspezifischen Farbdichten, die ein Mass für die Abweichung der Grautreppenbilder von einem neutralen Grau darstellen. Ferner bedeutet $d\,g\,b = d\,n\,b - d\,n\,g$ und $d\,n\,r\,g = d\,n\,r - d\,n\,g$ die entsprechenden Farbdichtedifferenzen. Entsprechendes gilt für die Farbdichtedifferenzen aus den Grautreppenwerten $d\,f^*\,b\,g$ und $d\,f^*\,r\,g$. Der Mischungsfaktor c' kann auch keine Konstante, sondern eine Funktion von $d\,f^*\,b\,g - d\,n\,b\,g$ und $d\,f^*\,r\,g - d\,n\,r\,g$ sein, d.h. einer starken Differenz zwischen den Dichtedifferenzen der Kopiervorlage und den Differenzwerten der zugehörigen Graustufen kann c' kleiner als 0,5 vorgegeben werden. Es werden dann die filmspezifischen Daten stärker gewertet, aus der Erfahrung heraus, dass bei einem Überwiegen des Grünanteils in den vorlagespezifischen Daten in aller Regel eine grüne Dominante durch das Aufnahmeobjekt gegeben ist. Durch das stärkere Bewerten der filmspezifischen Daten wird dann der Einfluss dieser Farbdominante auf die Kopie reduziert. Die auf diese Weise ermittelten gemischten Farbdichtewerte können dann in bekannter Weise noch so gewichtet werden, dass bei Unterbelichtung sich eine Verlängerung der Kopierzeiten ergibt, während bei Überbelichtung die Belichtungszeiten verkürzt werden. Dies geschieht durch Multiplikation der gemischten Dichten mit einem Faktor $1 - q \cdot (d\,n - d\,e)$, wobei q eine Konstante von 0,2 ist bei $d\,n < d\,e$ und zwischen 0,3 und 0,5 liegt bei $d\,n > d\,e$, wobei $d\,n$ die Neutraldichte des jeweiligen Negativs ist und $d\,e$ die Eichdichte bedeutet, d. h. die häufigste vorkommende mittlere Negativdichte (Neutraldichte).

Aus den so errechneten Steuerdichten $s\,d\,b$, g, r lässt sich durch folgende Gleichung der Belichtungszeit errechnen: $z\,b, g, r = z\,e\,b, g, r \cdot 10^{(s\,d\,b,\,g,\,r\, - \,d\,e\,b,\,g,\,r)}$. In dieser Gleichung bedeutet $z\,e\,b$, g, r die Eichzeit, die für eine bestimmte Kopiermaterialcharge empirisch als Belichtungszeit für befriedigende Kopien von einem Eichnegativ ermittelt wurde, während im Exponenten $s\,d\,b$, g, r die Steuerdichte in den jeweiligen Farben und $d\,e\,b$, g, r die Dichte des Eichnegativs in derselben Farbe bedeutet. Die tatsächlichen benötigten Belichtungszeiten werden also ermittelt durch Vergleich jeweils mit den für ein Eichnegativ erforderlichen Belichtungszeiten.

Anstelle der zuletzt dargestellten Errechnung der Belichtungszeiten könnte auch eine sogenannte Intensitätssteuerung durchgeführt werden, bei der alle Farbbelichtungen gleich lange dauern, so dass sie durch Einschieben eines Verschlusses gleichzeitig beendet werden. Die unterschiedliche Farbfilterung geschieht durch Anfärben des Strahlenganges, z. B. durch teilweise eingeschobene Farbfilter in einen strukturlosen Abschnitt des Beleuchtungsstrahlenganges, wobei der Grad der Anfärbung durch die ermittelten Steuerdichten in den einzelnen Farben festgelegt ist.

Die Wirkungsweise des Kopiergeräts gemäss Fig. 1 ist nun wie folgt: Der Film 1 wird mit den Grautreppenbildern 1d an seinem vorlaufenden Ende in das Kopiergerät eingeführt, bis die Grautreppenbilder 1d sich in der Abtastposition über den lichtelektrischen Elementen 3 befinden. Dort werden je nach Aufbau der Abtaststation gleichzeitig oder nacheinander die verschiedenen Grautreppenbilder ausgemessen und die Dichtewerte in dem Rechner 20 gespeichert. Bei Einlaufen des ersten Negativs in die Kopierstation bei geöffneten Filtern durch Öffnen eines nicht dargestellten Verschlusses wird die Kopierbelichtung eröffnet und gleichzeitig werden die Integraldichten der drei Grundfarben in der Vorlage gemessen und über den Rechner 20 die zugehörigen Belichtungszeiten ermittelt. Entsprechend der Dauer der Belichtung seit Öffnung des Verschlusses werden dann über die Elektromagnete 11, 13 und 15 die subtraktiven Filter 10, 12 und 14 jeweils zum richtigen Zeitpunkt in den Strahlengang eingeschoben und auf diese Weise die Belichtung partiell beendet. Mit dem Einschieben des dritten Filters ist dann der Kopiervorgang beendet und der Verschluss kann wieder geschlossen werden. Beim Einlauf des nächsten Negativs in die Kopierstation stehen die eingespeicherten Werte der Grautreppe weiterhin zur Verfügung, während die Messwerte der Vorlage erneut zu ermitteln sind. Auf diese Weise werden alle Negative eines Filmes, die mit Kerben 1c versehen sind, kopiert. Mit dem Einlaufen der Klebestelle in die Kopierstation wird das Filmende erkannt und die in dem Rechner 20 gespeicherten Werte für die Grautreppe gelöscht. Bei dem unmittelbar darauf in der Abtasteinrichtung einlaufenden nächsten Grautreppenbild wiederholt sich der geschilderte Vorgang.

Die Grautreppenbilder können jedoch auch in verkleinerter Form an anderer Stelle aufbelichtet werden, auch mehrmals auf einem Film.

Das geschilderte Verfahren der Auswertung der Grautreppenbilder zur Ermittlung der aufnahmematerialspezifischen Daten für die Neutraldichte $d\,n$ der jeweiligen Kopiervorlage ist auch dann vorteilhaft anzuwenden, wenn dies nicht in Kombination mit den Einzelfarbdichten der Kopiervorlage geschieht. Beispielsweise ist dies zweckmässig bei kontrollierten Aufnahmebedingungen, wie dies in Studios der Fall ist. In diesen Fällen gibt die Anwendung nur der aufnahmematerialspezifischen Daten zur Belichtungssteuerung auch Farbdominanten richtig wieder.

In den bisherigen Ausführungen zu der Erfindung wird ausschliesslich die Anwendung des Erfindungsgedankens auf das zur Zeit übliche Verfahren des Kopierens von Farbvorlagen, bei dem die Farbvorlage als ganzes kopiert wird, berücksichtigt. Die Erfindung ist aber auch auf Kopierverfahren anwendbar, bei denen eine Vorlage bereichsweise, bei einem Laserkopiergerät speziell punktweise kopiert wird. Bei der Ermittlung der Kopierlichtmengenverhältnisse der zu kopierenden Bereiche bzw. Punkte wird dann entsprechend der Vorgehensweise verfahren, die in dem Anwendungsbeispiel des Kopierens einer Farbvorlage im zur Zeit üblichen Verfahren beschrieben wurde. In diesem Fall besteht die zu kopierende Vorlage aus dem entsprechenden Bildbereich bzw. Bildpunkt.

Bei dem punktweisen Kopieren von Farbvorlagen ergibt sich eine weitere Anwendung des Erfindungsgedankens in Zusammenhang mit dem Film, wie er in dem britischen Patent 1458370 beschrieben ist. Aufgrund der spektralen Aufnahmeeigenschaften dieses Filmes müssen die vorlagespezifischen Messwerte eines Bildpunktes gemäss der Steigung der Schwärzungskurven bei der Berechnung der Kopierlichtmengen korrigiert werden. Die Kenntnis über diese Korrekturen ist aus den zusätzlichen Testbelichtungen zu ermitteln. Hierbei werden bei der Berechnung der Kopierlichtmengen eines Bildbereiches oder Bildpunktes nicht nur die Messwerte eines oder zwei, sondern aller Bilder der Graustufen benutzt, wenn die $\gamma$-Kurve zur Bestimmung der Belichtung notwendig ist.

**Patentansprüche**

1. Verfahren zur Bestimmung von Kopierlichtmengen für das Kopieren von Farbvorlagen, insbesondere Farbnegativen, auf fotografisches Farbkopiermaterial mittels einzeln steuerbarer Farbbelichtungen, wobei auf unbelichtete, ausserhalb des Bildbereichs liegende Bereiche desselben Aufnahmematerials der Farbvorlage vor dem Entwickeln eine Testbelichtung von vorbekannt unterschiedlichen Graustufen aufgebracht wird, die vor dem Kopieren in den verschiedenen Farben ausgemessen wird, und wobei aufgrund der Messergebnisse die Kopierlichtmengen für die Farbbelichtungen beeinflusst werden, dadurch gekennzeichnet, dass

a) die Farbdichtwerte d n b, g, r der Farbvorlage in den drei Grundfarben gemessen werden (vorlagenspezifische Werte),

b) dass die Neutraldichte d n als arithmetischer Mittelwert der vorlagenspezifischen Werte d n b, g, r, der Kopiervorlage berechnet wird,

c) dass die Farbdichtewerte d f b, g, r der entwickelten Graustufenaufnahmen in den drei Grundfarben gemessen werden,

d) dass zu jeder Graustufe die Neutraldichte d f n als arithmetischer Mittelwert der drei Farbdichtewerte d f b, g, r berechnet wird,

e) dass die Farbdichtewerte d f* b, g, r derjenigen Graustufe ermittelt werden, deren Neutraldichte d f n dem Mittelwert d n der drei vorlagenspezifischen Werte d n b, g, r der zu kopierenden Farbvorlage am nächsten kommt (aufnahmematerialspezifische Werte) oder dass durch Interpolation der Farbdichtewerte d f b, g, r der beiden benachbarten, mit ihren Neutraldichten d f n der Neutraldichte d n der drei vorlagenspezifischen Werte d n b, g, r am nächsten kommenden Graustufen die aufnahmematerialspezifischen Werte d f*, b, g, r errechnet werden,

f) dass aus den vorlagenspezifischen Werten d n b, g, r und den aufnahmematerialspezifischen Werten d f* b, g, r mit je einem Mischungsfaktor c' b, g, r gemischte Werte d b, g, r gebildet werden, wobei die Mischungsfaktoren c' b, g, r zwischen Null und Eins liegen,

g) dass von einer Eichvorlage die Farbdichtewerte in den drei Grundfarben gemessen (eichvorlagenspezifische Werte) und die zum Erreichen optimaler Kopien erforderlichen Kopierlichtmengen empirisch bestimmt werden und

h) dass die Änderungen der Kopierlichtmenge in jeder der drei Farben in Abhängigkeit von der Differenz zwischen den eichvorlagenspezifischen Werten und den aus vorlagenspezifischen und aufnahmematerialspezifischen Werten gemischten Werten errechnet wird.

2. Verfahren nach Anspruch 1, dadurch gekennzeichnet, dass die Testbelichtung unmittelbar vor der Entwicklung des Aufnahmematerials erfolgt.

3. Verfahren nach Anspruch 1, dadurch gekennzeichnet, dass die Testbelichtung bei der Konfektionierung des Aufnahmematerials erfolgt.

4. Verfahren nach Anspruch 1, dadurch gekennzeichnet, dass sowohl im Zusammenhang mit der Konfektionierung des Aufnahmematerials als auch kurz vor dessen Entwicklung an anderer Stelle Testbelichtungen vorgenommen werden und dass die Mischungsfaktoren c' b, g, r für die Mischung der aufnahmematerialspezifischen Werte gegenüber den vorlagenspezifischen Werten entsprechend den Unterschieden zwischen den beiden aufnahmematerialspezifischen Werten aus den beiden Testbelichtungen und den vorlagenspezifischen Werten verändert werden.

5. Verfahren nach Anspruch 1, dadurch gekennzeichnet, dass als Testbelichtung eine Grautreppe mit sechs Abstufungen auf das Material der Farbvorlage aufbelichtet wird, wobei der Dichteumfang der Grautreppe den Belichtungsbereich des Aufnahmematerials gleichmässig überdeckt.

6. Verfahren nach Anspruch 1, dadurch gekennzeichnet, dass die Mischungsfaktoren c' b, g, r von den Farbdichtewerten der zu kopierenden Vorlage, insbesondere von der Differenz der aufnahmematerial- und vorlagenspezifischen Werte abhängig sind.

7. Verfahren nach einem der vorangehenden Ansprüche, dadurch gekennnzeichnet, dass aus den aufnahmematerialspezifischen Werten d f b, g, r für jede Stufe der Grautreppenbilder der Differenzen der Blaudichte und der Gründichte d f b − d f g, sowie der Rotdichte und der Gründichte d f r − d f g gebildet und als Funktion der Neutraldichte d f n = $\frac{1}{3}$ (d f b + d f g + d f r) für den betreffenden Vorlagenstreifen gespeichert werden.

8. Verfahren nach Anspruch 1, dadurch gekennzeichnet, dass für den Fall kontrollierter Aufnahmebedingungen, wie sie z. B. in Studios vorhanden sind, die Mischungsfaktoren c' b, g, r gleich Null sind.

9. Verfahren nach einem der vorangehenden Ansprüche, dadurch gekennzeichnet, dass zur Anpassung des Kopier- an das Aufnahmematerial und zur Eichung der Dichtemesseinrichtung

a) mit jeweils konstanter Lichtmenge vorbekannt abgestufte Graufilter auf das Aufnahmematerial aufbelichtet werden, insbesondere Graufilter mit Dichten zwischen 0 und 6 mit einer solchen Lichtmenge, dass der gesamte Belichtungsbereich des Aufnahmematerials überdeckt wird,

b) dass von der Aufnahme eines Graufilters, deren Neutraldichte gleich 1 ist, eine Kopie mit solchen Farblichtmengen gezogen wird, dass sich ein diesem Graufilter gleiches Grau ergibt,

c) dass für die Aufnahmen der anderen Graufilter beim Kopieren mit gleichbleibenden Farbintensitäten die Belichtungszeiten in den Farben so verändert werden, dass sich zu der Kopie von der Aufnahme mit der Dichte 1 identische Kopien ergeben,

d) dass die Farbdichtewerte der Graufilteraufnahmen gemessen werden und

e) dass die Differenzen zwischen den Farbdichtewerten der Aufnahme mit der Neutraldichte 1 und denen der Aufnahmen der anderen Graufilter berechnet und den zur Herstellung einer Kopie mit der Neutraldichte 1 jeweils erforderlichen Belichtungszeitänderungen in Form einer Eichtabelle gegenübergestellt werden.

10. Vorrichtung zur Durchführung des Verfahrens nach einem der vorangehenden Ansprüche, dadurch gekennzeichnet, dass eine erste Messeinrichtung (3; 3a , 3b, 3c; 16) für die Farbdichtewerte der auf dem Vorlagenmaterial aufbelichteten Graufilteraufnahmen (1d) und eine zweite Messeinrichtung (9a, 9b, 9c, 9d, 9e, 9f; 17) für die Farbdichtewerte der Vorlagen (1a) vorgesehen sind, die an einen Rechner (20) oder einen Additionsverstärker angeschlossen sind, der die Belichtungen in den Einzelfarben steuert.

11. Vorrichtung nach Anspruch 10, dadurch gekennzeichnet, dass die Messeinrichtung für die Messung der Graufilteraufnahmen (1d) drei Messeinheiten (3a, 3b, 3c), für jede der Grundfarben eine, aufweist, die nacheinander die verschiedenen Abschnitte der Grautreppe (1d) abtasten und die Messwerte über eine Logarithmiereinrichtung (16) in einen Speicher des Rechners (20) eingeben.

**Revendications**

1. Procédé pour déterminer les quantités de lumière nécessaires pour le tirage d'originaux en couleur, notamment de négatifs en couleur, sur un support de tirage photographique en couleur, au moyen d'exposition en couleur pouvant être commandées individuellement, dans lequel on effectue, avant le développement, sur des régions non exposées, se trouvant en dehors de la région d'image, du même support photosensible que celui de l'original en couleur, une exposition d'essai d'échelons de gris différents connus à l'avance, que l'on mesure dans les couleurs différentes avant le tirage, et, sur la base des résultats de mesure, on influence les quantités de lumière nécessaires au tirage pour les expositions en couleur, caractérisé en ce que

a) on mesure les valeurs des densités de couleur d n b, g, r de l'original en couleur dans les trois couleurs fondamentales (valeurs spécifiques de l'original),

b) on calcule la densité neutre d n en prenant la valeur arithmétique moyenne des valeurs spécifiques de l'original d n b, g, r de l'original à tirer,

c) on mesure les valeurs de densité de couleur d f b, g, r des prises de vue développées des échelons de gris dans les trois couleurs fondamentales,

d) on calcule pour chaque échelon de gris la densité neutre d f n en prenant la valeur arithmétique moyenne des trois valeurs de densité de couleur d f b, g, r,

e) on détermine les valeurs de densité de couleur d f* b, g, r de chaque échelon de gris, dont la densité neutre d f n est la plus proche de la valeur moyenne d n des trois valeurs spécifiques d'original d n b, g, r, de l'original à tirer (valeurs spécifiques du support photosensible) ou on calcule, par interpolation des valeurs de densité de couleur d f b, g, r des deux échelons de gris voisins se rapprochant le plus par leur densité neutre d f n de la densité neutre des trois valeurs spécifiques de l'original d n b, g, r les valeurs spécifiques du support photosensible d f* b, g, r,

f) on forme à partir des valeurs spécifiques de l'original d n b, g, r et des valeurs spécifiques du support photosensible d f* b, g, r des valeurs d b, g, r mélangées respectivement à un facteur de mélange c' b, g, r, les facteurs de mélange c' b, g, r étant compris entre zéro et un,

g) on détermine empiriquement à partir d'un original d'étalonnage les valeurs de densités de couleur mesurées dans les trois couleurs fondamentales (valeurs spécifiques de l'original d'étalonnage) et les quantités de lumière pour le tirage nécessaires à l'obtention de copies optimales, et

h) on calcule la variation de la quantité de lumière nécessaire pour le tirage dans chacune des trois couleurs en fonction de la différence entre les valeurs spécifiques de l'original d'étalonnage et des valeurs mélangées provenant des valeurs spécifiques de l'original et des valeurs spécifiques du support photosensible.

2. Procédé suivant la revendication 1, caractérisé en ce qu'il consiste à effectuer l'exposition d'essai immédiatement avant le développement du support photosensible.

3. Procédé suivant la revendication 1, caractérisé en ce qu'il consiste à effectuer l'exposition d'essai lors de la préparation du support photosensible.

4. Procédé suivant la revendication 1, caractérisé en ce qu'il consiste à effectuer des expositions d'essai en d'autres endroits, tant en liaison avec la préparation du support photosensible, que peu avant son développement, et à modifier les facteurs de mélange c' b, g, r pour le mélange des valeurs spécifiques du support photosensible par rapport aux valeurs spécifiques pour l'original, en fonction des différences entre les deux valeurs spécifiques pour le support photosensible provenant des deux expositions d'essai et des valeurs spécifiques pour l'original.

5. Procédé suivant la revendication 1, caractérisé en ce qu'il consiste, pour l'exposition d'essai exposer une échelle de gris à six échelons sur le support de l'original en couleur, le contraste de l'échelle de gris recouvrant uniformément la plage d'exposition du support photosensible.

6. Procédé suivant la revendication 1, caractérisé en ce que les facteurs de mélange c' b, g, r dépendent des valeurs de densité de couleur de l'original à tirer, notamment de la différence entre les valeurs spécifiques du support photosensible et les valeurs spécifiques de l'original.

7. Procédé suivant l'une des revendications précédentes, caractérisé en ce qu'il consiste à former à partir des valeurs spécifiques pour le support photosensible d f b, g, r, pour chaque échelon des images de l'échelle de gris, les différences entre la densité de bleu et la densité de vert d f b − d f g, ainsi qu'entre la densité de rouge et la densité de vert d f r − d f g et à les mémoriser comme fonction de la densité neutre d f n = ⅓ (d f b + d f g + d f r) pour les bandes d'originaux concernées.

8. Procédé suivant la revendication 1, caractérisé en ce que, dans le cas de conditions de prises de vue contrôlées, comme par exemple en studio, les facteurs de mélange c' b, g, r sont égaux à zéro.

9. Procédé suivant l'une des revendications précédentes, caractérisé en ce qu'il consiste, pour adapter le support du tirage au support photosensible et pour étalonner le dispositif de mesure de densité à:

a) exposer à une quantité de lumière constante un filtre gris échelonné connu à l'avance sur le support photosensible, notamment à exposer un filtre gris, ayant des densités comprises entre 0 et 6, à une quantité de lumière telle que toute la plage d'exposition du support photosensible soit recouverte,

b) tirer de la prise de vue d'un filtre gris dont la densité neutre est égale à 1, un tirage avec des quantités le lumière en couleur telles que l'on obtienne un gris égal à ce filtre gris,

c) modifier pour la prise de vue des autres filtres gris, lors du tirage avec des intensités de couleur qui restent les mêmes, les temps d'exposition suivant les couleurs, de manière à obtenir des tirages identiques aux tirages de la prise de vue ayant la densité 1,

d) mesurer les valeurs de densités de couleur des prises de vue du filtre gris, et

e) calculer les différences entre les valeurs de densités de couleur de la prise de vue ayant la densité neutre 1, et celles des prises de vue des autres filtres gris, et à mettre en parallèle, sous la forme d'un tableau d'étalonnage, les variations de temps d'exposition nécessaires respectivement pour la préparation d'un tirage ayant la densité neutre 1.

10. Dispositif pour exécuter le procédé suivant l'une des revendications précédentes, caractérisé en ce qu'il est prévu un premier dispositif de mesure (3; 3a, 3b, 3c; 16) des valeurs de densité de couleur des prises de vue du filtre gris (1d) exposées sur le support pour les originaux et un second dispositif de mesure (9a, 9b, 9c, 9d, 9e, 9f; 17) des valeurs de densité de couleur des originaux (1a) qui sont raccordés à un ordinateur (20) ou à un amplificateur additionneur qui commande les expositions dans les couleurs individuelles.

11. Dispositif suivant la revendication 10, caractérisé en ce que le dispositif de mesure destiné à mesurer les prises de vue du filtre gris (1d) présente trois unités de mesure (3a, 3b, 3c) pour chacune des couleurs fondamentales, qui balayent l'une après l'autre les diverses sections de l'échelle de gris (1d) et qui envoient les valeurs mesurées dans une mémoire de l'ordinateur (20) par l'intermédiaire d'un dispositif logarithmique (16).

**Claims**

1. A method of determining the amount of copying light for the copying of colour originals, in particular colour negatives, onto photographic colour copying material by means of individually controllable colour exposures, wherein before development a test exposure of previously known varying shades of grey is applied on unexposed regions which lie outside the image region of the same exposure material of the colour original, which test exposure is measured before copying in the different colours, and on the basis of the measured results the amounts of copying light for the colour exposures are controlled, characterised in that

a) the colour density values d n b, g, r of the colour original are measured in the three primary colours (original-specific values),

b) the neutral density d n is calculated as the arithmetic mean value of the original-specific values d n b, g, r of the copying original,

c) the colour density values d f b, g, r of the developed exposures of the grey shades are measured in the three primary colours,

d) for each shade of grey the neutral density d f n is calculated as the arithmetic mean value of the three colour density, values d f b, g, r,

e) the colour density values d f* b, g, r are determined of that shade of grey whose neutral density d f n comes nearest to the mean value d n of three original-specific values d n b, g, r of the colour original to be copied (exposure material-specific values) or the exposure material-specific values d f*, b, g, r are calculated by interpolation of the colour density values d f b, g, r of the two adjacent shades of grey, which come nearest with their neutral densities d f n to the neutral density d n of the three original-specific values d n b, g, r,

f) composite values d b, g, r are formed from the original-specific values d n b, g, r and the exposure material-specific values d f* b, g, r with in each case a mixing factor c' b, g, r, wherein the mixing factors c' b, g, r lie between zero and one,

g) the colour density values are measured from a calibrated original in the three primary colours (calibrated original-specific values) and the amount of copying light required to achieve the optimum copies are determined empirically and

h) the alteration of the amount of copying light in each of the three colours is calculated as a function of the difference between the calibrated original-specific values and the values mixed from the original-specific and exposure material-specific values.

2. A method according to Claim 1, characterised in that the test exposure occurs directly before the development of the exposure material.

3. A method according to Claim 1, characterised in that the test exposure occurs during the manufacture of the exposure material.

4. A method according to Claim 1, characterised in that both in connection with the manufacture of the exposure material and shortly before its development at another place test exposures are carried out; and in that the mixing factors c' b, g, r are changed for mixing the exposure material-specific values with respect to the original-specific values corresponding to the differences between the two exposure material-specific values from the two test exposures and the original-specific values.

5. A method according to Claim 1, characterised in that as a test exposure a grey scale with six gradations is exposed onto the material of the colour original, and the density range of the grey scale uniformly overlaps the exposure range of the exposure material.

6. A method according to Claim 1, characterised in that the mixing factors c' b, g, r are independent of the colour density values of the original to be copied, in particular independent of the difference of the exposure material- and original-specific values.

7. A method according to any one of the preceding claims, characterised in that from the exposure material-specific values d f b, g, r for each shade of the grey scale image the differences of the blue density and the green density d f b − d f g, as well as of the red density and the green density d f r − d f g are formed and stored as a function of the neutral density d f n = ⅓ (d f b + d f g + d f r) for the respective original strips.

8. A method according to Claim 1, characterised in that in the event of controlled exposure conditions, as present e. g. in studios, the mixing factors c' b, g, r are equal to zero.

9. A method according to any one of the preceding claims, characterised in that for adapting the copy to the exposure material and for calibrating the density measuring device

a) previously known graduated grey filters are exposed within each case a constant amount of light onto the exposure material, in particular grey filters with densities between 0 and 6 with an amount of light such that the entire exposure range of the exposure material is covered,

b) from the exposure of a grey filter, whose neutral density is equal to 1, a copy is made with such amounts of colour light, that a grey equal to this grey filter results,

c) for the exposures of the other grey filters when copying with constant colour intensities the exposure times in the colours are altered such that copies result which are identical to the copy of the exposure with the density 1,

d) the colour density values of the grey filter exposures are measured, and

e) the difference between the colour density values of the exposure with the neutral density 1 and those of the exposures of the other grey filters are calculated and compared with the exposure time alterations required for the production of a copy with the neutral density 1 in each case in the form of a calibration table.

10. A device for carrying out the method according to any one of the preceding claims, characterised in that there are provided a first measuring device (3; 3a, 3b, 3c; 15) for the colour density values of the grey filter exposures (1d) exposed on the original material and a second measuring device (9a, 9b, 9c, 9d, 9e, 9f; 17) for the colour density values of the originals (1a), which are connected to a computer (20) or to an additional amplifier which controls the exposure in the individual colours.

11. A device according to Claim 10, characterised in that the measuring device for measuring the grey filter exposures (1d) comprises three measuring units (3a, 3b, 3c), one for each of the primary colours, which in succession scan the various sections of the grey scale (1d) and input the measured values **via** a logarithm device (16) into a store of the computer (20).

Fig. 1

Fig. 2

Fig. 3